(19) **Europäisches Patentamt**

**European Patent Office**

**Office européen des brevets**

(11) **EP 1 487 170 B1**

(12) **EUROPEAN PATENT SPECIFICATION**

(45) Date of publication and mention
of the grant of the patent:
**02.08.2006 Bulletin 2006/31**

(51) Int Cl.:
***H04L 29/06*** (2006.01)

(21) Application number: **04013650.9**

(22) Date of filing: **09.06.2004**

(54) **Authentication method in wire/wireless communication system using markup language**

Authentisierungsmethode in einem Draht/drahtlos-Kommunikationssystem mit Auszeichnungssprache

Méthode d'authentification dans un système de communication avec au sans fil utilisant un langage de balisage

(84) Designated Contracting States:
**AT BE BG CH CY CZ DE DK EE ES FI FR GB GR HU IE IT LI LU MC NL PL PT RO SE SI SK TR**

(30) Priority: **14.06.2003 KR 2003038545**

(43) Date of publication of application:
**15.12.2004 Bulletin 2004/51**

(73) Proprietor: **LG ELECTRONICS INC.**
**Seoul (KR)**

(72) Inventor: **Gu, Se-Wan**
**Seodaemum-Gu**
**Seoul (KR)**

(74) Representative: **Katérle, Axel et al**
**Wuesthoff & Wuesthoff**
**Patent- und Rechtsanwälte**
**Schweigerstraße 2**
**81541 München (DE)**

(56) References cited:
**US-A1- 2002 178 361**

- **SIMPSON W: "THE POINT-TO-POINT PROTOCOL (PPP)" RFC 1661, July 1994 (1994-07), pages 1-52, XP002150336**
- **BLUNK L ET AL: "PPP Extensible Authentication Protocol (EAP)" RFC 2284, March 1998 (1998-03), pages 1-15, XP015008068**

**Description**

BACKGROUND OF THE INVENTION

1. Field of the Invention

The present invention relates to authentication in a wire/wireless communication system using a markup language, and more particularly to, an authentication method between a client and a server in a wire/wireless communication system using a synchronization markup language (SyncML).

2. Description of the Related Art

In the case of an access requesting authentication between a client and a server in a wire/wireless communication system using a markup language, when the authentication is successfully performed, the access can be maintained and proceed to a succeeding step.

For example, when data synchronization is necessary due to dispersion of the same data in the wire/wireless network and terminals, an authentication process is required between a client and a server which need to maintain data synchronization.

The SyncML is a standard protocol for data synchronization which is used for synchronization of personal information on a web portal, cellular phone, or PC. In addition, the SyncML can support a data synchronization function for various application services such as an E-mail and a text memo as well as a management function for personal information.

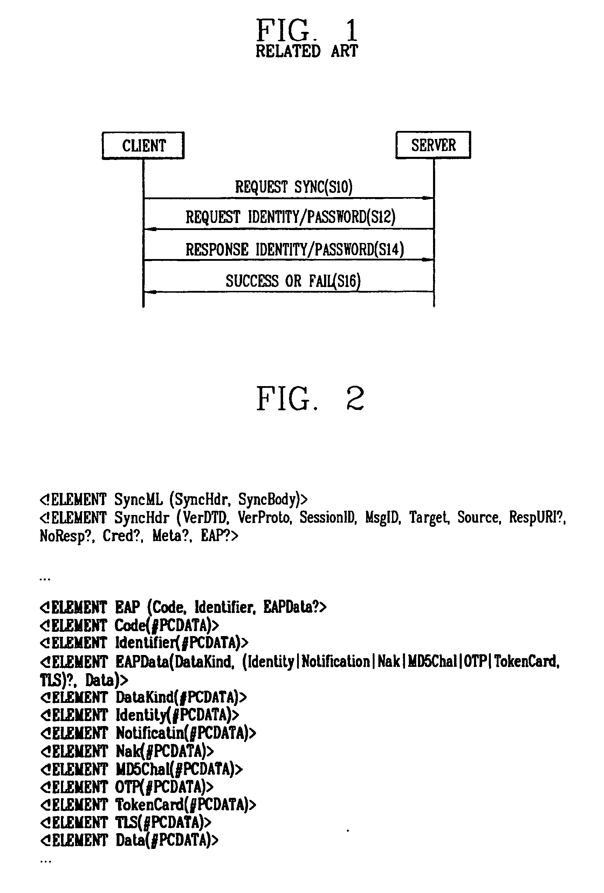

Fig. 1 illustrates a general authentication method between a client and a server in data synchronization of a communication system using the SyncML.

Referring to Fig. 1, when data synchronization is performed between the client and the server by using the SyncML, the client requests data synchronization to the server (S10). The server requests an identity and a password to the client (S12). The client encodes its identity and password, or compresses its identity and password by a predetermined algorithm such as MD5 and encodes the compressed identity and password, and transmits the encoded identity and password to the server (S14). The server confirms the identity and password, and notifies an authentication result to the client (S16).

When the authentication for the client has been successfully performed, the server transmits its identity and password to the client to be authenticated by the client. The client confirms the identity and password, and notifies an authentication result to the server.

When the bi-directional authentication has been successfully finished, a bi-directional or one way data synchronization procedure for the changed data is performed between the client and the server.

The general authentication method in the communication system using the markup language can perform the authentication merely by using identities and passwords. Accordingly, the authentication process must be performed based on the identities and passwords. Here, security information for authentication may be leaked, which results in weak security. A special authentication server for compensating for weak security of the authentication protocol can also be used. However, it is difficult to additionally install the authentication server.

SUMMARY OF THE INVENTION

Therefore, an object of the present invention is to provide an authentication method in a wire/wireless communication system using a markup language which can select various authentication method kinds between a client and a server, by embodying a structure protocol for a message used in the markup language to have various authentication method kinds.

Another object of the present invention is to provide an authentication method in a wire/wireless communication system using a markup language which can perform strong bi-directional authentication, by dynamically selecting authentication method kinds between a client and a server.

To achieve these and other advantages and in accordance with the purpose of the present invention, as embodied and broadly described herein, there is provided an authentication method in a wire/wireless communication system using a markup language which declares various authentication method kinds in a document type definition (DTD) for declaring a markup language structure, and dynamically selects the authentication method kind between a client and a server from the declared authentication method kinds.

When the client transmits an access request, the server randomly selects one of the authentication method kinds, and requests security information to the client according to the randomly-selected authentication method kind.

According to one aspect of the present invention, an authentication method between a client and a server in a wire/wireless communication system using a markup language includes the steps of: recognizing identical authentication method kinds between the client and the server; authenticating, at the server, the client by using one random authentication method kind of the identical authentication method kinds; and authenticating, at the client, the server by using another random authentication method kind of the identical authentication method kinds.

One random authentication method kind and another random authentication method kind are identical or different to/from each other.

According to another aspect of the present invention, an authentication protocol in a wire/wireless communication system using a markup language includes: an extensible markup language document type definition (XML DTD) for declaring various authentication method kinds by using an extensible authentication protocol (EAP) element; and an authentication message including an EAP element having information of one random authentication method kind of the declared authentication method kinds.

The EAP element essentially includes a <Code> element for indicating a kind of the authentication message and an <Identifier> element for identifying the authentication message, and selectively includes an <EAPData> element for containing actual data of the authentication message.

The <EAPData> element includes a <DataKind> element for indicating a kind of the data, and an information element having information of the random authentication method kind.

The foregoing and other objects, features, aspects and advantages of the present invention will become more apparent from the following detailed description of the present invention when taken in conjunction with the accompanying drawings.

## BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:

Fig. 1 illustrates a general authentication method between a client and a server in data synchronization of a communication system using a markup language;

Fig. 2 illustrates an XML DTD in accordance with the present invention;

Fig. 3 illustrates a confirmation method for available authentication methods between a client and a server in accordance with the present invention;

Fig. 4 illustrates an authentication method for data synchronization between the client and the server in accordance with the present invention;

Fig. 5 illustrates an authentication message (for example, EAP-Request/Identity message) for requesting an identity by using an EAP in accordance with the present invention;

Fig. 6 illustrates an authentication message (for example, EAP-Response/Identity message) for responding an actual value of the identity by using the EAP in accordance with the present invention;

Fig. 7 illustrates an authentication message (for example, EAP-Request/Challenge message) for requesting security information according to a random authentication method kind by using the EAP in accordance with the present invention;

Fig. 8 illustrates an authentication message (for example, EAP-Response/Credentials message) for responding the security information according to the random authentication method kind by using the EAP in accordance with the present invention; and

Fig. 9 illustrates an authentication message for transmitting an authentication result by using the EAP in accordance with the present invention.

## DETAILED DESCRIPTION OF THE PREFERRED EMBODIMENTS

Reference will now be made in detail to the preferred embodiments of the present invention, examples of which are illustrated in the accompanying drawings.

In general, data synchronization is performed by transmitting/receiving a message based on an extensible markup language (XML) between a client and a server, and a protocol for data synchronization includes a representation protocol, a synchronization protocol and a transport protocol. The synchronization protocol defines a method and procedure for exchanging a SyncML message between the client and the server, a method for performing synchronization, and a synchronization type. The transport protocol defines binding rules for using general transport protocols such as a hyper text transport protocol (HTTP) and a wireless session protocol (WSP) for message transport.

The representation protocol is a structure protocol for the SyncML message which defines an extensible markup language document type definition (XML DTD) for synchronization. The XML DTD which declares a markup used in the XML document defines logical and physical structures for the document.

Generally, language rules used to made up a document must be exactly transmitted to the whole users so that the users can recognize the contents of the document. The XML clarifies the language rules by using the DTD. That is, the DTD describes elements used in the XML document, attributes of the elements, relations between the elements and entities.

In accordance with the present invention, a plurality of authentication method kinds are defined in the XML DTD in advance, and the client and the server randomly select a few authentication method kinds from the defined authentication method kinds. The client and the server which need to set access compare their authentication method kinds, and recognize identical authentication method kinds. In the bi-directional authentication for data synchronization, the client and the server dynamically suggest their authentication method kinds to each other among the identical authentication method kinds, thereby more variously and safely performing the authentication procedure.

In accordance with the present invention, a new SyncML schema for an extensible authentication method for randomly selecting and deciding the authentication method kind between the client and the server is additionally defined, to design an XML DTD as shown in Fig. 2.

Fig. 2 illustrates the XML DTD in accordance with the present invention. The XML DTD includes a schema by an extensible authentication protocol (EAP) defined in the IETF RFC 2284 in order to obtain various authentication method kinds.

The XML DTD explains the structure of the SyncML message. According to the XML DTD, the SyncML message includes a header element <SyncHdr> and a body element <SyncBody>, and the header element <SyncHdr> includes DTD version <VerDTD>, protocol version <VerProto>, message ID <MsgID>, <Target>, <Source>, <RespURl>, <NoResp>, <Cred>, <Meta> and <EAP> elements. Here, <Target>, <Source>, <RespURl>, <NoResp>, <Cred> and <Meta> elements rarely relate to the EAP of the present invention, and thus explanations thereof are omitted. The body element includes a plurality of commands for performing a data synchronization procedure, but explanations thereof are also omitted.

The <EAP> element essentially includes <Code> element and <Identifier> element, and selectively includes <EAPData> element. The <Code> element for indicating a kind of the EAP message includes Request, Response, Success and Fail information. The <Identifier> element is an identifier for identifying the EAP message. The <EAPData> element which contains actual data of the EAP message mostly includes information of authentication. The <EAPData> element includes one of <Identity>, <Notification>, <Nak>, <MD5Chal>, <OTP>, <TokenCard> and <TLS> elements as well as <DataKind> element.

The <Identity> element indicates an authentication method using an identity of the client or server, the <Notification> element indicates notices which must be notified to the other party, the <Nak> element implies 'authentication is not necessary, do not respond', and the <MD5Chal> element is used to request or respond to a challenge by using an MD5 compression algorithm. The <OTP> element indicates an authentication method using an one time password (OTP) algorithm, the <TokenCard> element indicates an authentication method using information (token) by physical input, such as smart card input, pupil input and fingerprint input, and the <TLS> element which is a standard suggested by the IETF indicates an authentication method for providing encoding and certification by a transport layer (for example, transmission control protocol (TCP)), so that data can be transmitted through a secure channel without modifying application programs of the client and the server. That is, the <TLS> element indicates, for example, an authentication method using a certificate.

In accordance with the present invention, the XML DTD declares a plurality of authentication method kinds, such as the Identity/Password-based authentication method, the MD5-based authentication method, the OTP-based authentication method, the TokenCard-based authentication method and the certificate-based authentication method using TLS (transport layer security).

Because the XML DTD declares the plurality of authentication method kinds, the client and the server using the SyncML can selectively include a predetermined number of authentication method kinds among the declared authentication method kinds.

The client and the server include an authentication agent, respectively. The authentication agent performs the SyncML-based EAP procedure by the schema suggested to declare the plurality of authentication method kinds.

Each of the clients and each of the servers can have different authentication method kinds. Therefore, before starting the authentication procedure for data synchronization, the corresponding client and server notify their authentication method kinds to each other, and recognize identical available authentication method kinds.

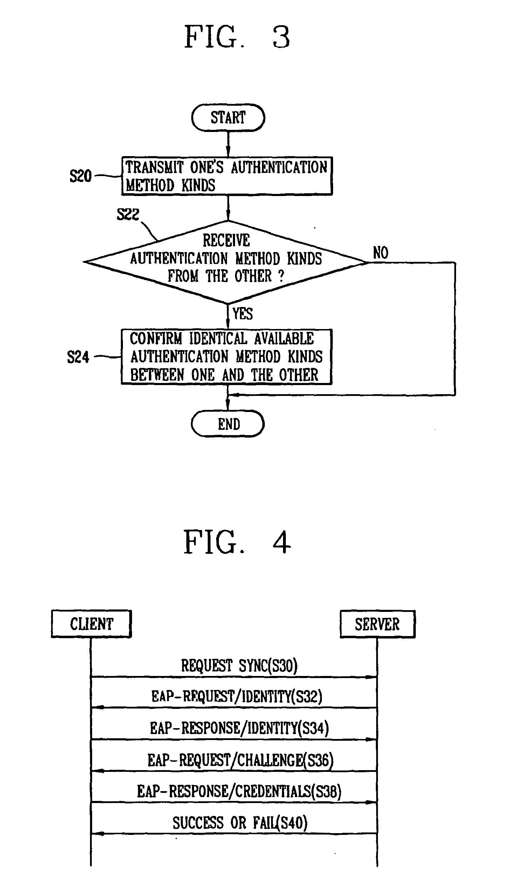

Fig. 3 illustrates a confirmation method for the available authentication methods between the client and the server in accordance with the present invention.

In the case of the client and the server requiring data synchronization, the client transmits its authentication method kinds to the server (S20). The client receives the authentication method kinds of the server from the server (S22).

The client compares its authentication method kinds with the authentication method kinds of the server, and recognizes identical available authentication method kinds (S24). In addition, the server recognizes the identical available authentication method kinds between its authentication method kinds and the authentication method kinds of the client.

For example, when the authentication method kinds of the client are Identity, MD5Chal, OTP and TLS and the authentication method kinds of the server are Identity, MD5Chal, OTP, TokenCard and TLS, the client and the server confirm the identical Identity, MD5Chal, OTP and TLS authentication method kinds.

After confirming the identical available authentication method kinds, the client and the server perform the authentication procedure for data synchronization.

Fig. 4 illustrates the authentication method for data synchronization between the client and the server in the communication system using the SyncML in accordance with the present invention.

As illustrated in Fig. 4, the client requests data synchronization to the server (S30), and the server requests an identity to the client (S32). The client transmits its identity to the server upon the request (S34). In order to confirm that the client actually owns the identity, the server randomly selects one of the identical available authentication method kinds between the server and the client, and requests security information of the identity to the client according to the selected authentication method kind (S36). The client transmits the security information of its identity to the server according to the selected authentication method kind (S38). When the security information from the client is normal security information, the server decides that the authentication has been successfully performed according to the randomly-selected authentication method kind, and transmits success information to the client (S40).

The server can also request authentication to the client, which is performed in the same manner. Thus, detailed explanations thereof are omitted.

The authentication method of the client by the server will now be described in more detail.

First, the client attempts to access the server to request data synchronization. That is, the client generates a data synchronization request message Request Sync, and transmits the generated message Request Sync to the server through a TCP/IP (S30).

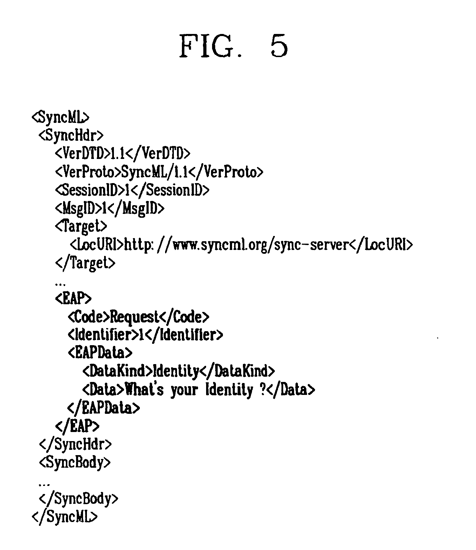

In order to use the EAP of the invention, as shown in Fig. 5, the server generates a first EAP request message EAP-Request/Identity for requesting an identity by using <EAP> element and sub-elements thereof. The first EAP request message EAP-Request/Identity includes <Code> element for indicating a request, <Identifier> element for indicating '1', and <EAPData> element as the sub-elements of the <EAP> element. The <EAPData> element includes <DataKind> element for indicating an identity according to the selected authentication method, and <Data> element for indicating data which the client will display to the user. The server transmits the first EAP request message EAP-Request/Identity to the client (S32).

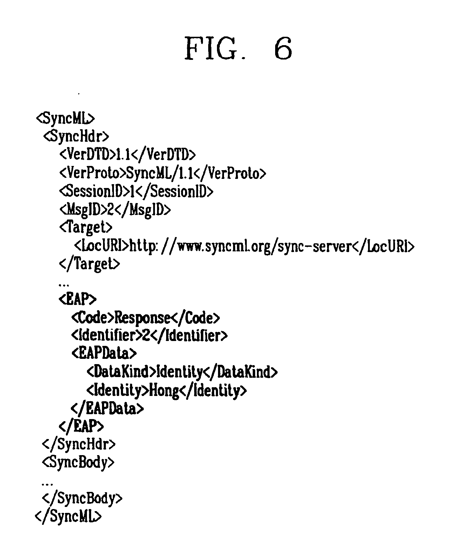

The client analyzes the first EAP request message EAP-Request/Identity. When the client detects the <EAP> element, the client recognizes that the authentication process is performed by using the EAP, also recognizes that the first EAP request message EAP-Request/Identity is an authentication message for requesting an identity on the basis of the <Code> element and the <DataKind> element of the <EAP> element, and generates a first EAP response message EAP-Response/Identity as shown in Fig. 6. That is, the client records 'Response' for indicating a response on <Code> element of <EAP> element of the first EAP response message EAP-Response/Identity, and 'identity' on <DataKind> element of <EAPData> element. When the identity of the client is 'Hong', the client also records 'Hong' on <Identity> element. The client transmits the first EAP response message EAP-Response/Identity to the server (S34).

The server analyzes the first EAP response message EAP-Response/Identity. The server recognizes that the client having the identity of 'Hong' waits for authentication on the basis of <Code>Response</Code>, <DataKind>Identity</DataKind> and <Identity>Hong</Identity> of the <EAP> element of the first EAP response message EAP-Response/Identity. Accordingly, the server randomly selects one of the available authentication method kinds, and requests security information of the identity to the client according to the selected authentication method kind in order to confirm that the client actually owns the identity of 'Hong', thereby performing the actual authentication process.

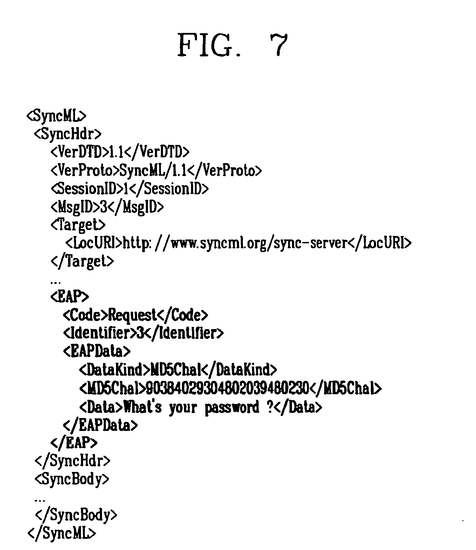

That is, when the authentication method kind randomly selected by the server from the available authentication method kinds is 'MD5Chal', as shown in Fig. 7, the server records 'Request' on <Code> element of <EAP> element, 'MD5Chal' on <DataKind> element of <EAPData> element, a random value, '90384029304802039480230' on <MD5Chal> element, and 'What's your password?' on <Data> element, thereby generating a second EAP request message EAP-Request/challenge. In the case that the authentication method kind randomly selected from the available authentication method kinds is 'OTP', the server includes <DataKind>OTP<DataKind> and <OTP>x<OTP>, thereby generating the second EAP request message EAP-Request/challenge. The server transmits the second EAP request message EAP-Request/challenge to the client (S36).

The client receiving the second EAP request message EAP-Request/challenge recognizes that the client must respond the password (security information) of its identity to the server with the random value recorded on the <MD5Chal> element by using an MD5 compression algorithm on the basis of <DataKind>MD5Chal<DataKind> and <MD5Chal>90384029304802039480230</MD5Chal> of the <EAP> element.

The client calculates a response value by using the password (security information) of its identity and the random value recorded on the <MD5Chal> element through the MD5 compression algorithm, as represented by following

formula 1:

$$MD5(Random\ value + Password + \alpha)\ \text{-------}\ Formula\ 1$$

Here, $\alpha$ denotes a preset value for identifying an identity, such as a resident registration number.

That is, the client compresses the random value, its password and $\alpha$ through the MD5 compression algorithm. The compression result value (response value) always has predetermined bits (for example, 128 bits), and an input value is not obtained from the result value. The MD5 is an irreversible function. Therefore, if the compression result value (response value) is leaked, the password cannot be inferred.

In the case that <DataKind>OTP<DataKind> and <OTP>x<OTP> are recorded on the <EAP> element of the second EAP request message EAP-Request/challenge, the client prepares a response value by using the received 'x' and its password.

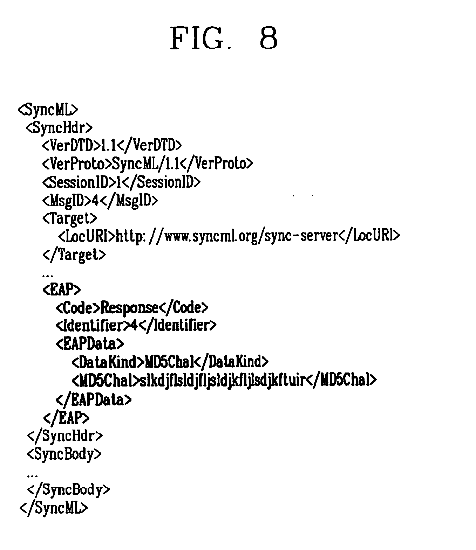

The client generates a second EAP response message EAP-Response/Credentials to have the response value as shown in Fig. 8, and transmits the second EAP response message EAP-Response/Credentials to the server (S38). In the second EAP response message EAP-Response/Credentials of Fig. 8, 'slkdjflsldjfljsldjkfljlsdjkftuir' recorded as a value of <MD5Chal> element denotes the response value.

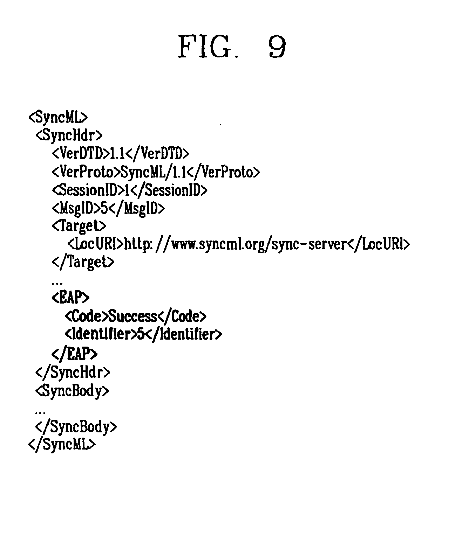

The server receiving the second EAP response message EAP-Response/Credentials searches a password of the corresponding identity from a user registration database. The server compresses the searched password and the random value transmitted from the server to the client as a challenge in the same manner as the above formula 1. The server compares the value calculated by the compression with the response value from the client. When the calculated value is identical to the response value, the server decides that the authentication has been successfully performed according to the randomly-selected authentication method kind, and when the calculated value is different from the response value, the server decides that the authentication has failed. As depicted in Fig. 9, the server generates an authentication result message by recording an authentication result on <Code> element of <EAP> element, and transmits the authentication result message to the client (S40).

The client receiving the authentication result message of Fig. 9 recognizes that the authentication has been successfully performed on the basis of <Code>Success</Code>. The authentication result message does not need <EAPData> element.

As discussed earlier, in accordance with the present invention, a variety of authentication method kinds are defined in the XML DTD, so that the authentication method kinds can be freely selected between the client and the server using the markup language.

Furthermore, the authentication method kinds can be dynamically selected between the client and the server, which results in strong bi-directional authentication.

As the present invention may be embodied in several forms without departing from the essential characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalence of such metes and bounds are therefore intended to be embraced by the appended claims.

**Claims**

1. An authentication method between a client and a server in a wire/wireless communication system, **characterized by** the steps of providing a markup language document type definition specifying a plurality of authentication method kinds, selecting one from the authentication method kinds specified in the document type definition, and transmitting (S32, S36) a markup language authentication message indicating the selected authentication method kind between the client and server.

2. The method of claim 1, wherein the authentication method kinds specified in the document type definition comprise an identity-based authentication method, a Message Digest Algorithm 5-based authentication method, a One Time Password-based authentication method, a TokenCard-based authentication method and a certificate-based authentication method using Transport Layer Security.

3. The method of claim 1, wherein the client and server recognize (S20, S22, S24) identical available authentication method kinds before starting an authentication procedure.

**4.** The method of claim 1, wherein the server selects one of the authentication method kinds specified in the document type definition by the server following receipt of an access request (S30) from the client and requests (S32, S36) security information from the client according to the selected authentication method kind.

**5.** The method of claim 4, wherein the server transmits (S32, S36) to the client a request message indicating the selected authentication method kind and including a request for security information according to the selected authentication method kind.

**6.** The method of claim 5, wherein the client, upon receipt of the request message, detects the selected authentication method kind and the request for security information from the request message, and transmits (S34, S38) security information to the server as a response according to the selected authentication method kind.

**7.** The method of claim 6, wherein the client detects the selected authentication method kind from an authentication method kind-indicating element (<DataKind>) of an authentication information-containing element (<EAPData>) of an authentication-related element (<EAP>) of the request message.

**8.** The method of claim 6, wherein the request message further comprises a random value.

**9.** The method of claim 8, wherein a response according to the selected authentication method kind comprises a result value obtained by processing the random value, the security information and a set value according to the detected authentication method kind, wherein the random value is detected from the request message.

**10.** The method of claim 9, wherein the set value comprises another value for identifying the client.

**11.** The method of claim 9, wherein the server retrieves from a database the security information it requested from the client, processes the retrieved security information according to the selected authentication method kind to obtain a result value, and compares the result value with the response from the client, to determine authentication success or failure.

**12.** A markup language data structure comprising an extensible markup language document type definition for access by a client or server in an authentication method according to one of claims 1 to 11, **characterized by** an extensible authentication protocol element, EAP, specifying a plurality of authentication method kinds.

**13.** The method of claim 1, wherein the client and the server, in the wire/wireless communication system using a markup language, recognize usable authentication method kinds between the client and the server, wherein the server authenticates the client by using a first random authentication method kind of the usable authentication method kinds, and wherein the client authenticates the server by using a second random authentication method kind of the usable authentication method kinds.

**14.** The method of claim 13, wherein the first and second random authentication method kinds are different from each other.

**15.** The method of claim 13, wherein the first and second random authentication method kinds are identical to each other.

**Patentansprüche**

**1.** Authentifikationsverfahren zwischen einem Client und einem Server in einem drahtgebundenen/drahtlosen Kommunikationssystem, **gekennzeichnet durch** die Schritte der Bereitstellung einer eine Mehrzahl von Authentifikationsverfahrensarten spezifizierenden Dokumententypdefinition für eine Auszeichnungssprache, des Auswählens einer der in der Dokumententypdefinition spezifizierten Authentifikationsverfahrensarten sowie der Übermittlung (S32, S36) einer die ausgewählte Authentifikationsverfahrensart angebenden Authentifikationsnachricht in der Auszeichnungssprache zwischen dem Client und dem Server.

**2.** Verfahren nach Anspruch 1, wobei die in der Dokumententypdefinition spezifizierten Authentifikationsverfahrensarten ein Authentifikationsverfahren auf Identitätsbasis, ein Authentifikationsverfahren auf Basis des Message Digest Algorithm 5, ein Authentifikationsverfahren auf Basis eines Einmalpassworts, ein Authentifikationsverfahren auf Basis einer TokenCard sowie ein Authentifikationsverfahren auf Zertifikatbasis mit Transport-Schicht-Sicherheit umfassen.

**3.** Verfahren nach Anspruch 1, wobei der Client und der Server vor dem Start einer Authentifikationsprozedur gleiche verfügbare Authentifikationsverfahrensarten erkennen (S20, S22, S24).

**4.** Verfahren nach Anspruch 1, wobei der Server eine der in der Dokumententypdefinition seitens des Servers nach Empfang einer Zugangsanforderung (S30) von dem Client spezifizierten Authentifikationsverfahrensarten auswählt und nach Maßgabe der ausgewählten Authentifikationsverfahrensart Sicherheitsinformationen von dem Client anfordert (S32, S36).

**5.** Verfahren nach Anspruch 4, wobei der Server an den Client eine Anforderungsnachricht übermittelt (S32, S36), welche die ausgewählte Authentifikationsverfahrensart angibt und eine Anforderung von Sicherheitsinformationen nach der ausgewählten Authentifikationsverfahrensart enthält.

**6.** Verfahren nach Anspruch 5, bei dem der Client nach Empfang der Anforderungsnachricht die ausgewählte Authentifikationsverfahrensart sowie die Anforderung von Sicherheitsinformationen aus der Anforderungsnachricht ermittelt und als Antwort Sicherheitsinformationen nach der ausgewählten Authentifikationsverfahrensart an den Server übermittelt (S34, S38).

**7.** Verfahren nach Anspruch 6, wobei der Client die ausgewählte Authentifikationsverfahrensart anhand eines Authentifikationsverfahrensart-Hinweiselements (<DataKind>) eines Authentifikationsinformationen enthaltenden Elements (<EAPData>) eines authentifikationsbezogenen Elements (<EAP>) der Anforderungsnachricht ermittelt.

**8.** Verfahren nach Anspruch 6, wobei die Anforderungsnachricht ferner einen Zufallswert enthält.

**9.** Verfahren nach Anspruch 8, wobei eine Antwort nach der ausgewählten Authentifikationsverfahrensart einen durch Verarbeiten des Zufallwerts, der Sicherheitsinformationen und eines gegebenen Werts nach der ermittelten Authentifikationsverfahrensart erhaltenen Ergebniswert umfasst, wobei der Zufallswert aus der Anforderungsnachricht ermittelt wird.

**10.** Verfahren nach Anspruch 9, wobei der gegebene Wert einen weiteren Wert zur Identifizierung des Client umfasst.

**11.** Verfahren nach Anspruch 9, wobei der Server die Sicherheitsinformationen, welche er von dem Client angefordert hat, aus einer Datenbank entnimmt, die entnommenen Sicherheitsinformationen nach der ausgewählten Authentifikationsverfahrensart verarbeitet, um einen Ergebniswert zu erhalten, und den Ergebniswert mit der Antwort des Client vergleicht, um Erfolg oder Versagen der Authentifikation zu bestimmen.

**12.** Datenstruktur für eine Auszeichnungssprache, umfassend eine Dokumententypdefinition für eine erweiterbare Auszeichnungssprache zum Zugang durch einen Client oder einen Server im Rahmen eines Authentifikationsverfahrens nach einem der Ansprüche 1 bis 11, **gekennzeichnet durch** ein eine Mehrzahl von Authentifikationsverfahrensarten spezifizierendes erweiterbares Authentifikationsprotokollelement EAP.

**13.** Verfahren nach Anspruch 1, wobei der Client und der Server in dem eine Auszeichnungssprache nutzenden drahtgebundenen/drahtlosen Kommunikationssystem nutzbare Authentifikationsverfahrensarten zwischen dem Client und dem Server erkennen, wobei der Server den Client mit Hilfe einer ersten zufälligen Authentifikationsverfahrensart aus den nutzbaren Authentifikationsverfahrensarten authentifiziert und wobei der Client den Server mit Hilfe einer zweiten zufälligen Authentifikationsverfahrensart aus den nutzbaren Authentifikationsverfahrensarten authentifiziert.

**14.** Verfahren nach Anspruch 13, wobei die erste und die zweite zufällige Authentifikationsverfahrensart unterschiedlich sind.

**15.** Verfahren nach Anspruch 13, wobei die erste und die zweite zufällige Authentifikationsverfahrensart identisch sind.

**Revendications**

**1.** Procédé d'authentification entre un client et un serveur dans un système de communication filaire/sans fil, **caractérisé par** les étapes consistant à fournir une définition de type de document de langage de marquage, spécifiant une pluralité de genres de procédés d'authentification, sélectionner l'un des procédés d'authentification spécifiés dans la définition de type de document, et transmettre (S32, 536) un message d'authentification de langage de marquage indiquant le genre de procédé d'authentification sélectionné entre le client et le serveur.

2. Procédé selon la revendication 1, dans lequel les genres de procédés d'authentification spécifiés dans la définition de type de document comprennent un procédé d'authentification à base d'identité, un procédé d'authentification basé sur 5 algorithmes de résumé de message, un procédé d'authentification à base de mot de passe à utilisation unique, un procédé d'authentification à base de carte à jetons, et un procédé d'authentification à base de certificat utilisant une sécurité de couche transport.

3. Procédé selon la revendication 1, dans lequel le client et le serveur identifient (S20, S22, S24) les genres de procédés d'authentification disponibles identiques avant de lancer une procédure d'authentification.

4. Procédé selon la revendication 1, dans lequel le serveur sélectionne l'un des genres de procédés d'authentification spécifiés dans la définition de type de document par le serveur à la suite de la réception d'une demande d'accès (S30) délivrée par le client et d'une information de sécurité (S32, S36) des demandes délivrée par le client en conformité avec le genre de procédé d'authentification sélectionné.

5. Procédé selon la revendication 4, dans lequel le serveur transmet (S32, S36) au client un message de demande indiquant le genre de procédé d'authentification sélectionné et comprenant une demande d'information de sécurité en conformité avec le genre de procédé d'authentification sélectionné.

6. Procédé selon la revendication 5, dans lequel le client, à la réception du message de demande, détecte le genre de procédé d'authentification sélectionné et la demande d'information de sécurité dans le message de demande, et transmet (S34, S38) l'information de sécurité au serveur en tant que réponse, en conformité avec le genre de procédé d'authentification sélectionné.

7. Procédé selon la revendication 6, dans lequel le client détecte le genre de procédé d'authentification sélectionné à partir d'un élément (<Datakind>) indiquant le genre de procédé d'authentification, d'un élément (<EAPData> contenant des informations d'authentification d'un élément (<EAP>) se rapportant à l'authentification du message de demande.

8. Procédé selon la revendication 6, dans lequel le message de demande comprend en outre une valeur aléatoire.

9. Procédé selon la revendication 8, dans lequel la réponse en conformité avec le genre de procédé d'authentification sélectionné comprend une valeur de résultat obtenue par traitement de la valeur aléatoire, de l'information de sécurité et d'une valeur de réglage en conformité avec le genre de procédé d'authentification détecté, dans lequel la valeur aléatoire est détectée à partir du message de demande.

10. Procédé selon la revendication 9, dans lequel la valeur de réglage comprend une autre valeur destinée à l'identification du client.

11. Procédé selon la revendication 9, dans lequel le serveur retrouve dans une base de données l'information de sécurité qu'il a demandée au client, traite l'information de sécurité retrouvée en conformité avec le genre de procédé d'authentification sélectionné afin d'obtenir une valeur de résultat, et compare la valeur de résultat avec la réponse délivrée par le client afin de déterminer le succès ou l'échec de l'authentification.

12. Structure de données en langage de marquage comprenant une définition de type de document de langage de marquage extensible destinée à un accès par un client ou un serveur dans un procédé d'authentification selon l'une des revendications 1 à 11, **caractérisée par** un élément de protocole d'authentification extensible, EAP, spécifiant une pluralité de genres de procédés d'authentification.

13. Procédé selon la revendication 1, dans lequel le client et le serveur, dans le système de communication filaire/sans fil utilisant un langage de marquage, identifient les genres de procédés d'authentification utilisables entre le client et le serveur, dans lequel le serveur authentifie le client au moyen d'un premier genre de procédé d'authentification aléatoire parmi les genres de procédés d'authentification utilisables, et dans lequel le client authentifie le serveur au moyen d'un deuxième genre de procédé d'authentification aléatoire parmi les genres de procédés d'authentification utilisables.

**14.** Procédé selon la revendication 13, dans lequel les premier et deuxième genres de procédés d'authentification aléatoires sont différents l'un de l'autre.

**15.** Procédé selon la revendication 13, dans lequel les premier et deuxième genres de procédés d'authentification aléatoires sont identiques l'un et l'autre.

# FIG. 1
RELATED ART

```
┌─────────┐                                              ┌─────────┐
│ CLIENT  │                                              │ SERVER  │
└─────────┘                                              └─────────┘
     │                                                        │
     │              REQUEST SYNC(S10)                         │
     │───────────────────────────────────────────────────────▶│
     │           REQUEST IDENTITY/PASSWORD(S12)               │
     │◀───────────────────────────────────────────────────────│
     │           RESPONSE IDENTITY/PASSWORD(S14)              │
     │───────────────────────────────────────────────────────▶│
     │               SUCCESS OR FAIL(S16)                     │
     │◀───────────────────────────────────────────────────────│
     │                                                        │
```

# FIG. 2

```
<!ELEMENT SyncML (SyncHdr, SyncBody)>
<!ELEMENT SyncHdr (VerDTD, VerProto, SessionID, MsgID, Target, Source, RespURI?,
NoResp?, Cred?, Meta?, EAP?>


...


<!ELEMENT EAP (Code, Identifier, EAPData?>
<!ELEMENT Code(#PCDATA)>
<!ELEMENT Identifier(#PCDATA)>
<!ELEMENT EAPData(DataKind, (Identity|Notification|Nak|MD5Chal|OTP|TokenCard,
TLS)?, Data)>
<!ELEMENT DataKind(#PCDATA)>
<!ELEMENT Identity(#PCDATA)>
<!ELEMENT Notificatin(#PCDATA)>
<!ELEMENT Nak(#PCDATA)>
<!ELEMENT MD5Chal(#PCDATA)>
<!ELEMENT OTP(#PCDATA)>
<!ELEMENT TokenCard(#PCDATA)>
<!ELEMENT TLS(#PCDATA)>
<!ELEMENT Data(#PCDATA)>

...
```

# FIG. 3

```
        ┌─────────┐
        │  START  │
        └────┬────┘
             │
   ┌─────────────────────────┐
S20│TRANSMIT ONE'S AUTHENTICATION│
   │METHOD KINDS             │
   └─────────┬───────────────┘
             │
    S22      │
         ╱───────────╲
        ╱   RECEIVE    ╲      NO
  ─────< AUTHENTICATION METHOD KINDS >──────┐
        ╲  FROM THE OTHER ? ╱                │
         ╲───────────╱                       │
             │ YES                           │
   ┌─────────────────────────┐               │
   │CONFIRM IDENTICAL AVAILABLE│              │
S24│AUTHENTICATION METHOD KINDS│              │
   │BETWEEN ONE AND THE OTHER │               │
   └─────────┬───────────────┘               │
             │◄────────────────────────────────┘
        ┌─────────┐
        │   END   │
        └─────────┘
```

# FIG. 4

```
┌────────┐                              ┌────────┐
│ CLIENT │                              │ SERVER │
└───┬────┘                              └───┬────┘
    │                                       │
    │         REQUEST SYNC(S30)             │
    │──────────────────────────────────────►│
    │                                       │
    │       EAP-REQUEST/IDENTITY(S32)       │
    │◄──────────────────────────────────────│
    │                                       │
    │      EAP-RESPONSE/IDENTITY(S34)       │
    │──────────────────────────────────────►│
    │                                       │
    │     EAP-REQUEST/CHALLENGE(S36)        │
    │◄──────────────────────────────────────│
    │                                       │
    │    EAP-RESPONSE/CREDENTIALS(S38)      │
    │──────────────────────────────────────►│
    │                                       │
    │        SUCCESS OR FAIL(S40)           │
    │◄──────────────────────────────────────│
    │                                       │
```

# FIG. 5

```
<SyncML>
 <SyncHdr>
   <VerDTD>1.1</VerDTD>
   <VerProto>SyncML/1.1</VerProto>
   <SessionID>1</SessionID>
   <MsgID>1</MsgID>
   <Target>
     <LocURI>http://www.syncml.org/sync-server</LocURI>
   </Target>
   ...
   <EAP>
     <Code>Request</Code>
     <Identifier>1</Identifier>
     <EAPData>
       <DataKind>Identity</DataKind>
       <Data>What's your identity ?</Data>
     </EAPData>
   </EAP>
 </SyncHdr>
 <SyncBody>
 ...
 </SyncBody>
</SyncML>
```

# FIG. 6

```
<SyncML>
 <SyncHdr>
   <VerDTD>1.1</VerDTD>
   <VerProto>SyncML/1.1</VerProto>
   <SessionID>1</SessionID>
   <MsgID>2</MsgID>
   <Target>
      <LocURI>http://www.syncml.org/sync-server</LocURI>
   </Target>
   ...
   <EAP>
     <Code>Response</Code>
     <Identifier>2</Identifier>
     <EAPData>
        <DataKind>Identity</DataKind>
        <Identity>Hong</Identity>
     </EAPData>
   </EAP>
 </SyncHdr>
 <SyncBody>
  ...
 </SyncBody>
</SyncML>
```

# FIG. 7

```
<SyncML>
 <SyncHdr>
   <VerDTD>1.1</VerDTD>
   <VerProto>SyncML/1.1</VerProto>
   <SessionID>1</SessionID>
   <MsgID>3</MsgID>
   <Target>
     <LocURI>http://www.syncml.org/sync-server</LocURI>
   </Target>
   ...
   <EAP>
     <Code>Request</Code>
     <Identifier>3</Identifier>
     <EAPData>
       <DataKind>MD5Chal</DataKind>
       <MD5Chal>903840293048020394802 30</MD5Chal>
       <Data>What's your password ?</Data>
     </EAPData>
   </EAP>
 </SyncHdr>
 <SyncBody>
 ...
 </SyncBody>
</SyncML>
```

# FIG. 8

```
<SyncML>
 <SyncHdr>
   <VerDTD>1.1</VerDTD>
   <VerProto>SyncML/1.1</VerProto>
   <SessionID>1</SessionID>
   <MsgID>4</MsgID>
   <Target>
     <LocURI>http://www.syncml.org/sync-server</LocURI>
   </Target>
   ...
   <EAP>
     <Code>Response</Code>
     <Identifier>4</Identifier>
     <EAPData>
       <DataKind>MD5Chal</DataKind>
       <MD5Chal>slkdjflsldjfljsldjkfljlsdjkftuir</MD5Chal>
     </EAPData>
   </EAP>
 </SyncHdr>
 <SyncBody>
 ...
 </SyncBody>
</SyncML>
```

# FIG. 9

```
<SyncML>
 <SyncHdr>
   <VerDTD>1.1</VerDTD>
   <VerProto>SyncML/1.1</VerProto>
   <SessionID>1</SessionID>
   <MsgID>5</MsgID>
   <Target>
     <LocURI>http://www.syncml.org/sync-server</LocURI>
   </Target>
   ...
   <EAP>
     <Code>Success</Code>
     <Identifier>5</Identifier>
   </EAP>
 </SyncHdr>
 <SyncBody>
 ...
 </SyncBody>
</SyncML>
```